# EUROPÄISCHE PATENTSCHRIFT

(11) **EP 2 653 290 B1**
(45) Veröffentlichungstag und Bekanntmachung des Hinweises auf die Patenterteilung: **22.07.2015**
(21) Anmeldenummer: 13163137.6
(22) Anmeldetag: 10.04.2013
(51) Int. Cl.: B29C 49/12, B29C 49/36, B29C 49/18, B29C 49/58, B29C 49/64, B29C 49/66, B29C 49/78

(54) **Blasformmaschine mit Bodenkühlung in Stabilisierungsphase**
Blow-moulding machine with floor cooling in the stabilisation phase
Machine de formage par soufflage avec refroidissement du sol dans une phase de stabilisation

(30) Priorität: 17.04.2012 DE 102012103349
(43) Veröffentlichungstag der Anmeldung: 23.10.2013
(73) Patentinhaber: Krones AG, 93073 Neutraubling (DE)
(72) Erfinder: Knapp, Peter, 93073 Neutraubling (DE)
(74) Vertreter: Bittner, Bernhard

(56) Entgegenhaltungen:
- WO-A2-2008/000704
- DE-A1-102004 014 653
- DE-T2- 60 015 577
- DE-U1-202008 005 393
- JP-A- H07 156 259

## Beschreibung

Die vorliegende Erfindung bezieht sich auf eine Vorrichtung und ein Verfahren zum Herstellen von Kunststoffbehältnissen und insbesondere zum Umformen von Kunststoffvorformlingen zu Kunststoffbehältnissen. Derartige Vorrichtungen und Verfahren sind aus dem Stand der Technik seit langem bekannt. Üblicherweise werden zunächst Kunststoffvorformlinge mittels eines Ofens erwärmt und anschließend diese so erwärmten Kunststoffvorformlinge in einer Blasformmaschine, insbesondere einer Streckblasmaschine, zu den Behältnissen durch Beaufschlagung mit Blasluft umgeformt. Dieser Umformungsprozess ist dabei ein relativ aufwendiger Prozess und gliedert sich üblicherweise in mehrere Teilschritte. So wird mit einem Vorblasdruck das Behältnis expandiert, anschließend wird üblicherweise ein Fertigblasdruck angewandt und schließlich wird das so expandierte Behältnis noch für eine vorgegebene Zeit unter diesem Druck gehalten, damit sich der verformte Zustand stabilisieren kann.

Vorrichtungen und Verfahren der eingangs genannten Art sind aus den Druckschriften DE 102004014653 A1 und DE 60015577 T2 bekannt.

Auch sind aus dem Stand der Technik Vorrichtungen und Verfahren bekannt, bei denen die Behältnisse während des Umformungsvorgangs oder danach partiell, insbesondere in einem Bodenbereich, gekühlt werden, um auf diese Weise den Bodenbereich zu stabilisieren. Weiterhin sind zur Erreichung dieser Bodenstabilitäten auch andere Vorgehensweisen bekannt.

So ist es bekannt, dass im Auslauf einer derartigen Blasmaschine Bodennachkühlungen durch Luft oder Wasservarianten verbaut sind. Derartige Nachkühlungen bringen jedoch diverse Nachteile mit sich. Bei einer Luftgebläsekühlung sind die Idealvoraussetzungen nur in den seltensten Fällen realisierbar. So entsteht beispielsweise im Falle einer Vortexdüse ein unnötiger Luftverbrauch. Auch bei einer Gebläsevariante liegen nur selten ideale Aufstellbedingungen vor. Eine Bodennachkühlung mittels Wasser hat den Nachteil, dass anschließend die Behältnisse mit Wasser befeuchtet oder benetzt sind, was wiederum ein Problem für eine nachfolgende Etikettierung darstellt.

Der vorliegenden Erfindung liegt daher die Aufgabe zugrunde, eine Vorrichtung und ein Verfahren zur Verfügung zu stellen, welche die Behältnisherstellung energieeffizienter gestalten. Insbesondere soll dabei auch eine Vorrichtung und ein Verfahren ermöglicht werden, welches eine Kühlung bestimmter Behältnisbereiche, insbesondere eines Bodens bereits während der Blasformung ermöglicht.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Expandieren von Kunststoffbehältnissen weist eine Transporteinrichtung auf, welche die Kunststoffbehältnisse entlang eines vorgegebenen Transportpfades transportiert. Weiterhin weist die Vorrichtung wenigstens eine erste an der Transporteinrichtung angeordnete und von der Transporteinrichtung transportierte Umformungsstation auf, welche die Kunststoffbehältnisse durch Beaufschlagung mit einem gasförmigen Medium expandiert (bzw. in der die Kunststoffvorformlinge expandiert werden). Daneben oder zusätzlich ist es auch möglich, dass die Kunststoffbehältnisse mittels Durchleitung eines gasförmigen Mediums gekühlt werden. Weiterhin ist eine zweite an der Transporteinrichtung angeordnete und von der Transporteinrichtung transportierte Umformungsstation vorgesehen, welche die Kunststoffbehältnisse durch Beaufschlagung mit einem gasförmigen Medium expandiert. Weiterhin weisen die erste Umformungsstation und zweite Umformungsstation jeweils Reckstangen zum Dehnen der zu expandierenden Kunststoffbehältnisse in deren Längsrichtungen auf und diese Reckstangen weisen jeweils einen Kanal auf, über welchen den zu expandierenden Kunststoffbehältnissen durch die Reckstange hindurch ein gasförmiges Medium zuführbar ist.

Weiterhin weist die Vorrichtung eine erste Gasbereitstellungseinrichtung auf, welche der ersten Umformungsstation wenigstens zeitweise ein unter Druck stehendes gasförmiges Medium zur Verfügung stellt, wobei dieses gasförmige Medium diesen in der ersten Umformungsstation zu expandierenden Kunststoffbehältnis wenigstens zeitweise durch die Reckstange hindurch zuführbar ist. Dabei ist es möglich, dass die erste Gasbereitstellungseinrichtung der ersten Umformungsstation das unter Druck stehende gasförmige Medium zur Expansion eines in der zweiten Umformungsstation zu expandierenden Kunststoffbehältnisses und/oder zur Aufrechterhaltung eines Expansionszustandes dieses Kunststoffbehältnisses und/oder zur Kühlung des Kunststoffbehältnisses zur Verfügung stellt. Unter dem Begriff des Expandierens des Behältnisses wird im Folgenden auch der gesamte Prozess einschließlich etwaiger Stabilisierungs- und Kühlungsphasen verstanden.

Erfindungsgemäß weist die Vorrichtung eine zweite Gasbereitstellungseinrichtung auf, welche mit einem Innenraum des in der ersten Umformungsstation zu expandierenden Kunststoffbehältnis derart in Strömungsverbindung bringbar ist, dass ein zwischen der zweiten Gasbereitstellungseinrichtung und dem Innenraum des Kunststoffbehältnisses strömendes Gas zwischen der Reckstange und einer Wandung der Kunststoffbehältnisse strömt, wobei die erste Gasbereitstellungseinrichtung und die zweite Gasbereitstellungseinrichtung über den Innenraum des in der ersten Umformungsstation angeordneten Kunststoffbehältnisses wenigstens zeitweise in Strömungsverbindung stehen und diese zweite Gasbereitstellungseinrichtung wenigstens zeitweise auch in Strömungsverbindung mit einem in der zweiten Umformungsstation befindlichen Kunststoffbehältnis steht und wobei die Druckverhältnisse der ersten Gasbereitstellungseinrichtung und der zweiten Gasbereitstellungseinrichtung derart gewählt sind, dass wenigstens zeitweise eine Gasströmung von der zweiten Gasbereitstellungseinrichtung zu der ersten Gasbereitstellungseinrichtung - insbesondere über das in der ersten Umformungsstation befindliche Kunststoffbehältnis - erfolgt.

Es wäre auch denkbar, dass bei einzelnen Vorrichtungen keine Reckstangen verwendet werden, welche die Behältnisse dehnen, sondern alternativ Spülstangen, die in das Innere der Behältnisse geführt werden, um das Innere des Behältnisses, insbesondere dessen Boden oder Seitenwände, zu kühlen, die aber dann nicht notwendigerweise einen Reckvorgang der Behältnisse durchführen. Besonders bevorzugt handelt es sich bei den Reckstangen um Spülstangen, die es ermöglichen, das Behältnis durch Zufuhr eines Mediums zu spülen bzw. kühlen.

Bevorzugt dient die zweite Gasbereitstellungseinrichtung dazu, um das Behältnis derart mit Gas zu beaufschlagen, dass sich dessen Innenvolumen vergrößert. Die zweite Gasbereitstellungseinrichtung ist daher bevorzugt für die Volumenvergrößerung des (sich insbesondere innerhalb einer Blasform befindlichen) Kunststoffbehältnisses verantwortlich. Bevorzugt stellt daher die zweite Gasbereitstellungseinrichtung den Druck zum Durchführen des Fertigblasvorgangs zur Verfügung.

Es wird also erfindungsgemäß eine Vorrichtung vorgeschlagen, bei der wenigstens zwei Gasbereitstellungseinrichtungen zur Verfügung stehen, welche hier jedoch insbesondere über den Innenraum wenigstens eines zu expandierenden Behältnisses kommunizieren. In dieser Situation kann beispielsweise ein Gas, welche zur Kühlung eines zu expandierenden Behältnisses bzw. eines bereits expandierten Behältnisses verwendet wird, wiederum einer weiteren Umformungsstation zur Verfügung gestellt werden. Mit anderen Worten wird in wenigstens einem Zeitraum die durch die Reckstange strömende Luft zur Kühlung verwendet und gleichzeitig wenigstens mittelbar einer weiteren Blasstation bzw. Umformungsstation zur Verfügung gestellt. Unter einer bestehenden Strömungsverbindung zwischen den Gasbereitstellungseinrichtungen wird insbesondere verstanden, dass Ventile in dem Bereich der Strömungsverbindung wenigstens teilweise geöffnet sind.

Bei einer vorteilhaften Ausführungsform ist eine Kompressoreinrichtung vorgesehen, welche wenigstens eine Gasbereitstellungseinrichtung mit Druckluft versorgt und welche bevorzugt wenigstens zeitweise auch die zweite Gasbereitstellungseinrichtung mit Druckluft versorgt. Die zweite Gasbereitstellungseinrichtung kann dabei besonders bevorzugt beim Startvorgang der Blasmaschine vom Kompressor gespeist werden.

Neben den beiden oben genannten Gasbereitstellungseinrichtungen können auch noch weitere Gasbereitstellungseinrichtungen zur Versorgung der Umformungsstationen vorgesehen sein. So kann beispielsweise eine Gasbereitstellungseinrichtung in Form eines Vorblaskanals und/oder in Form eines Fertigblaskanals und/oder in Form eines PI-Kanals und/oder In Form eines (Luft)bereitstellungskanals vorgesehen sein.

Bei der Transporteinrichtung handelt es sich vorteilhaft um eine drehbare Transporteinrichtung und insbesondere um ein Blasrad, an dem wenigstens die beiden Umformungsstationen angeordnet sind. Vorteilhaft ist an der Transporteinrichtung eine Vielzahl von Umformungsstationen angeordnet, beispielsweise acht Umformungsstationen, zwölf Umformungsstationen oder dergleichen.

Vorteilhaft weisen die oben erwähnten Umformungsstationen jeweils Blasformen auf, in die die Kunststoffvorformlinge zu deren Expansion einbringbar sind und aus denen die anschließend gefertigten Behältnisse wieder entnommen werden können. Dabei sind vorteilhaft diese Blasstationen aufklappbar, insbesondere aufklappbar, um anschließend einen Kunststoffvorformling einbringen zu können.

Bei einer weiteren vorteilhaften Ausführungsform weisen die Blasstationen jeweils eine Blasdüse auf, welche an eine Mündung der zu expandierenden Behältnisse anlegbar ist. Wie oben erwähnt, verläuft ein Strömungsweg des Expansionsmediums, insbesondere der Blasluft, zumindest abschnittsweise durch die Reckstange hindurch. Ein weiterer Strömungsweg verläuft vorteilhaft zwischen der Reckstange und einer Wandung des Kunststoffbehältnisses, insbesondere zwischen einem Außenumfang der Reckstange und einer Mündung des zu expandierenden Behältnisses.

Vorteilhaft ist eine Steuerung vorgesehen, welche für wenigstens einen dieser beiden Strömungswege, vorteilhaft für beide Strömungswege eine Führung der Blasluft in beide Richtungen, d.h. in das Behältnis hinein und aus dem Behältnis heraus ermöglicht.

Bei einer weiteren vorteilhaften Ausführungsform sind die Druckverhältnisse der ersten Gasbereitstellungseinrichtung und der zweiten Gasbereitstellungseinrichtung wenigstens zeitweise derart gewählt, dass sich die von diesen Gasbereitstellungseinrichtungen zur Verfügung gestellten Drücke wenigstens zeitweise um weniger als 30%, bevorzugt um weniger als 20% und besonders bevorzugt um weniger als 10% voneinander unterscheiden. Auf diese Weise ist es möglich, dass während einer Phase des Expansionsprozesses, insbesondere während einer Stabilisierungsphase, gleichzeitig eine Kühlung eines Bereichs des Behältnisses, insbesondere des Bodens vorgenommen werden kann. Vorteilhaft ist zumindest während dieser Phase zeitweise ein von der ersten Gasbereitstellungseinrichtung an einer bestimmten Umformungsstation zur Verfügung gestellter Druck etwas höher, als der von der zweiten Gasbereitstellungseinrichtung zur Verfügung gestellte Druck. Es wäre dabei möglich, dass wenigstens eine Gasbereitstellungseinrichtung und bevorzugt beide Gasbereitstellungseinrichtungen als Druckkanäle ausgebildet sind, welche mehrere Umformungsstationen und besonders bevorzugt sämtliche Umformungsstationen der Vorrichtung mit Druckluft versorgen.

Bei einer weiteren vorteilhaften Ausführungsform ist die zweite Umformungsstation bezogen auf die Transportbewegung der Kunststoffvorformlinge oder Kunststoffbehältnisse der ersten Umformungsstation nachgeordnet. Dies bedeutet, dass dasjenige Behältnis, welches in der ersten Umformungsstation bereits gekühlt wird, im Rahmen des Fertigungsprozesses bereits weiter fortgeschritten ist als das in der oben erwähnten zweiten Umformungsstation angeordnete Behältnis. Dies bedeutet, dass eine Blasluftströmung von der ersten vorausgehenden Umformungsstation zu einer zweiten nachfolgenden Umformungsstation strömt. Mit anderen Worten kann die Strömung, die zur Expansion und/oder Kühlung eines ersten Kunststoffbehältnissen verwendet wird, bevorzugt auch zur Expansion und/oder Stabilisierung eines zweiten Kunststoffbehältnisses verwendet werden.

Eine derartige Strömung kann durch eine entsprechende Beschaltung mit Ventilen erreicht werden.

Bei einer weiteren vorteilhaften Ausführungsform stellt die erste Gasbereitstellungseinrichtung zeitweise das unter Druck stehende gasförmige Medium (insbesondere das der zweiten Umformungsstation zur Verfügung stehende Medium) zur Expansion und/oder Stabilisierung eines in der zweiten Umformungsstation angeordneten Kunststoffbehältnisses zur Verfügung. Vorteilhaft stehen beide Gasbereitstellungseinrichtungen - bevorzugt jeweils zu unterschiedlichen zeitlichen Abschnitten - mit unterschiedlichen Umformungsstationen, bzw. den in diesen Umformungsstationen befindlichen Kunststoffvorformlingen, in Strömungsverbindung.

Die erste Gasbereitstellungseinrichtung kann dabei das Gas auch über die erste Umformungsstation bzw. über das in der ersten Umformungsstation befindliche Behältnis (und/oder auch unmittelbar) der zweiten Umformungsstation zur Verfügung stellen.

Bei einer weiteren vorteilhaften Ausführungsform weist die Vorrichtung eine Steuerungseinrichtung auf, welche bewirkt, dass der Zeitraum, in dem die erste Gasbereitstellungseinrichtung der ersten Umformungsstation das gasförmige Medium zur Verfügung stellt und der Zeitraum, in dem die erste Gasbereitstellungseinrichtung der zweiten Umformungsstation das gasförmige Medium zur Verfügung stellt wenigstens teilweise versetzt sind.

Bei einer weiteren vorteilhaften Ausführungsform weist die Vorrichtung eine Steuerungseinrichtung auf, welche bewirkt, dass der Zeitraum, in dem die erste Gasbereitstellungseinrichtung der ersten Umformungsstation das gasförmige Medium zur Verfügung stellt und der Zeitraum, in dem die zweite Gasbereitstellungseinrichtung der zweiten Umformungsstation das gasförmige Medium zur Verfügung stellt wenigstens teilweise gleichzeitig und/oder versetzt sind.

Dies bedeutet, dass die Kunststoffbehältnisse zu unterschiedlichen Zeiten expandiert werden. Bei der Steuerungseinrichtung kann es sich beispielsweise um eine Ventilsteuerung handeln, welche Ventile des Blasprozesses steuert. Vorteilhaft ist jeder einzelnen Umformungsstation wenigstens ein und bevorzugt mehrere Ventile zugeordnet. Die Steuerungseinrichtung kann durch eine entsprechende Ansteuerung dieser Ventile die Blasprozesse in den einzelnen Umformungsstationen steuern. Vorteilhaft ist dabei diese Steuerungseinrichtung derart ausgelegt, dass auch zeitweise Luft über die einzelnen Reckstangen bzw. Spülstangen in die Kunststoffbehältnisse geführt wird.

Bei einer weiteren vorteilhaften Ausführungsform weist die Vorrichtung eine Vielzahl von Umformungsstationen auf, und sämtliche Umformungsstationen stehen wenigstens zeitweise mit der ersten Gasbereitstellungseinrichtung in Strömungsverbindung. Vorteilhaft stehen sämtliche Umformungsstationen auch wenigstens zeitweise mit der zweiten Gasbereitstellungseinrichtung in Strömungsverbindung. Diese Strömungsverbindung kann dabei über die Blasdüsen, welche jeweils Bestandteile der einzelnen Umformungsstationen sind, hergestellt werden.

Bei einer weiteren vorteilhaften Ausführungsform ist, wie oben erwähnt, wenigstens eine Gasbereitstellungseinrichtung ein Kanal und bevorzugt ein Ringkanal.

Bei einer weiteren vorteilhaften Ausführungsform weist wenigstens eine Reckstange eine Gasaustrittsöffnung in einem Endabschnitt der Reckstange auf. Über diese Öffnung kann jeweils eine Kühlung des Bodens der Behältnisse erreicht werden. Vorteilhaft handelt es sich bei dem Endabschnitt der Reckstange um einen Endabschnitt, der während des Umformungsprozesses an den Boden der Behältnisse herangeführt wird. Vorteilhaft dient dieser Endabschnitt dazu, um das Behältnis durch Reckung entlang einer Längsrichtung auszudehnen. Bevorzugt handelt es sich bei dieser Öffnung um die einzige Öffnung der Reckstange, die auch als Spülstange bezeichnet werden kann. Es wäre jedoch auch denkbar, dass mehrere Öffnungen z.B. schräge Öffnungen angeordnet sind, über die das gasförmige Medium in einer schräg zu der Längsrichtung stehenden Richtung und insbesondere auf den Boden der Behältnisse gerichtet austreten kann.

Die vorliegende Erfindung ist weiterhin auf ein Verfahren zum Expandieren von Kunststoffbehältnissen gerichtet, wobei die Kunststoffbehältnisse mittels einer Vielzahl von Umformungsstationen durch Beaufschlagung mit einem gasförmigen Medium expandiert werden und wobei von einer ersten Gasbereitstellungseinrichtung das gasförmige Medium zur Verfügung gestellt wird und einem in einer Umformungsstation befindlichen Kunststoffbehältnis wenigstens zeitweise durch eine Reckstange hindurch zugeführt wird.

Erfindungsgemäß steht wenigstens zeitweise während der Zuführung des gasförmigen Mediums zu dem in der ersten Umformungsstation befindlichen Kunststoffbehältnis diese erste Umformungsstation in einer Strömungsverbindung mit einer zweiten Gasbereitstellungseinrichtung und diese zweite Gasbereitstellungseinrichtung steht wenigstens zeitweise in Strömungsverbindung mit einer zweiten Umformungsstation. Dabei verläuft eine Strömungsverbindung zwischen dieser zweiten Gasbereitstellungseinrichtung und der ersten Gasbereitstellungseinrichtung wenigstens abschnittsweise zwischen einer Reckstange und einer Mündung des Behältnisses.

Es wird daher auch verfahrensseitig vorgeschlagen, dass der Druck eines gasförmigen Mediums, welches zur Bodenkühlung bzw. zur Bereichskühlung der Behältnisse verwendet wird, auch für eine weitere Umformungsstation zur Expansion der Behältnisse verwendet wird.

Vorteilhaft werden die Behältnisse während ihrer Expansion transportiert. Besonders bevorzugt ist die zweite Umformungsstation entlang eines Transportpfades der Behältnisse hinter der ersten Umformungsstation angeordnet.

Bei einem weiteren vorteilhaften Verfahren wird die Zuführung des gasförmigen Mediums durch die Reckstange zur Stabilisierung eines Behältnisabschnitts auf diesen Behältnisabschnitt gerichtet. Insbesondere handelt es sich hier bei dem Behältnisabschnitt um einen Boden des Behältnisses.

Vorteilhaft weist wenigstens zeitweise die erste Gasbereitstellungseinrichtung einen um höchstens 30%, bevorzugt einen um höchstens 20% und bevorzugt einen um höchstens 10% höheren Druck auf als die zweite Gasbereitstellungseinrichtung.

Insbesondere durch diese relativ geringen Druckunterschiede kann eine gezielte Kühlung eines Behältnisses mit einer Druckbereitstellung zu einem weiteren Behältnis, insbesondere gleichzeitig, vorgenommen werden.

Vorteilhaft wird das Behältnis bereits vor der Zuführung des gasförmigen Mediums durch die Reckstange durch Beaufschlagung mit einem gasförmigen Medium expandiert. Dies bedeutet, dass die hier beschriebenen Schaltungen, d.h. die Verwendung des Drucks zur Kühlung des Behältnisses gezielt erst mit oder nach der eigentlichen Ausformung des Behältnisses eingesetzt werden.

Vorteilhaft wird das Behältnis zunächst mit einem Vorblasdruck beaufschlagt, besonders bevorzugt anschließend mit einem Fertigblasdruck, der zum Ausformen des Behältnisses dient und schließlich noch mit einem Druck, der das ausgeformte Behältnis stabilisieren soll.

Bei einem weiteren vorteilhaften Verfahren wird das Behältnis nach dessen Expansion druckentlastet und bevorzugt wird ein im Rahmen dieser Druckentlastung anfallendes Gas wenigstens auch zeitweise durch die Reckstange hindurch geleitet. Dies bedeutet, dass auch dieser Zeitabschnitt der Druckentlastung zur weiteren Kühlung des Behältnisses bzw. dessen Boden verwendet werden kann.

Vorteilhaft erfolgen die Expansion des Kunststoffbehältnisses in der ersten Umformungsstation und die Expansion des Kunststoffbehältnisses in der zweiten Umformungsstation zeitversetzt zueinander.

Bei einem weiteren vorteilhaften Verfahren werden auch unterschiedliche Druckniveaus bei der Erzeugung der Kunststoffbehältnisse zur Verfügung gestellt.

Bei einem weiteren vorteilhaften Verfahren herrscht zumindest zeitweise und bevorzugt ständig während eines Fertigblasens eines Behältnisses und/oder während eines Spülens des Behältnisses im Wesentlichen (bzw. nahezu) das gleiche Druckniveau in der ersten Gasbereitstellungseinrichtung, in dem Behältnis und der zweiten Gasbereitstellungseinrichtung.

Dies bedeutet, dass diese Druckverhältnisse bzw. Drücke sich während dieser genannten Phasen des Fertigblasens und/oder des Spülens (bevorzugt während beider Phasen) um weniger als 30%, bevorzugt um weniger als 20%, bevorzugt um weniger als 10% und bevorzugt um weniger als 5% voneinander unterscheiden. Durch diesen geringen Druckunterschied ist ein gezieltes Aufrechterhalten des Innendrucks des Behältnisses und gleichwohl ein geringer Medienstrom zur Kühlung des Bodenbereichs möglich. Dabei ist es möglich, dass der Druck gradiell von der zweiten Gasbereitstellungseinrichtung hin zu der ersten Gasbereitstellungseinrichtung (oder, falls gewünscht auch in der umgekehrten Richtung) abfällt

Weitere Vorteile und Ausführungsformen ergeben sich aus den beigefügten Zeichnungen:
Darin zeigen:
   - Fig. 1: eine schematische Darstellung eines Umformungsvorgangs nach dem Stand der Technik;
   - Fig. 2: eine schematische Darstellung eines erfindungsgemäßen Umformungsvorgangs;
   - Fig. 3a, 3b: eine Darstellung eines erfindungsgemäßen Blasformvorgangs in einem kontinuierlichen Betrieb;
   - Fig. 4a, 4b: eine Darstellung eines Blasformvorgangs zu Beginn oder nach einer entstandenen Lücke;
   - Fig. 5a, 5b: die Darstellung eines Blasformvorgangs am Ende eines Prozesses bzw. bei dem letzten Behältnis vor einer Lücke;
   - Fig. 6a, 6b: einen kontinuierlichen Betrieb bei einer anderen Ausführungsform der Erfindung;
   - Fig. 7a, 7b: einen Blasformvorgang zu Beginn oder nach einer Lücke für den in Fig. 6a, 6b beschriebenen Vorgang; und
   - Fig. 8a, 8b: zwei Darstellungen für das letzte Behältnis in dem Blasformvorgang nach Fig. 6a, 6b.

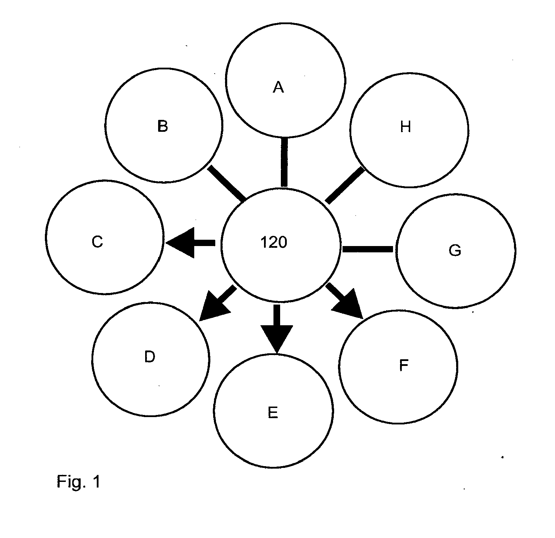

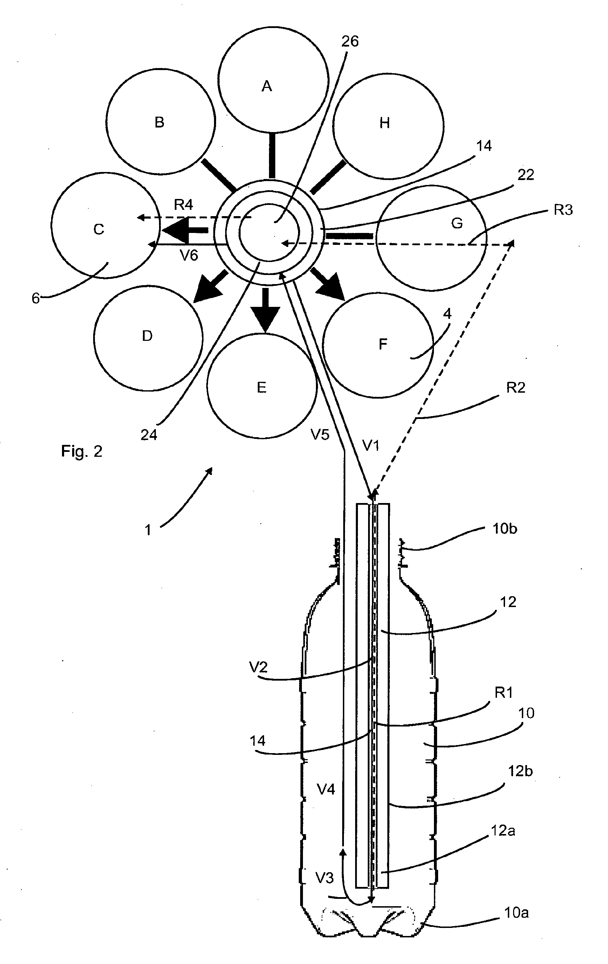

Fig. 1 zeigt eine grob schematische Darstellung eines Verfahrensablaufs nach dem Stand der Technik. Dabei ist hier grob schematisch eine Blasmaschine mit acht Stationen A-H dargestellt. Die Buchstaben kennzeichnen dabei (wie auch in Fig. 2) folgende Verfahrenszustände:
- A:: Geöffnete Blasform;
- B:: Übergabe eines Kunststoffvorformlings in die Blasform;
- C:: Entstehung des Behältnisses - insbesondere durch Druckbeaufschlagung;
- D:: Behältnis fertiggestellt und unter Druck gehalten;
- E:: Behältnis fertiggestellt und unter Druck gehalten;
- F:: Behältnis fertiggestellt und unter Druck gehalten;
- G:: Behältnis entlasten (druckentlasten),
- H:: Übergabe des gefertigten Behältnisses aus der Blasform.

Das Bezugszeichen 120 kennzeichnet grob schematisch ein Reservoir bzw. eine Zurverfügungstellungseinheit für eine Vor- und eine Fertigblasluft. Die einzelnen Umformungsstationen sind bevorzugt identisch aufgebaut und bewegen sich bevorzugt hier entgegen dem Uhrzeigersinn.

Fig. 2 veranschaulicht eine erfindungsgemäße Ausführungsform. Auch hier ist wieder eine Blasformmaschine 1 mit den bereits unter Bezug auf Fig. 1 beschriebenen Stationen dargestellt. Das Bezugszeichen 4 kennzeichnet hier die erste Umformungsstation und das Bezugszeichen 6 eine zweite Umformungsstation. Sämtliche Umformungsstationen sind an einem gemeinsamen Träger bzw. einer gemeinsamen Transporteinrichtung angeordnet.

Während die in Fig. 1 gezeigte Darstellung das bekannte Prinzip mit Vor- und Fertigblasen sowie Druck- und Kühlphasen mit anschließendem Entlasten zeigt, zeigt die zweite Darstellung ein Blasrad 14 mit acht Stationen im Blasprozess. Allerdings ist hier ein zusätzlicher Bereitstellungskanal 22, d.h. die erste Gasbereitstellungseinrichtung 22 vorgesehen.

Bei der in Fig. 2 gezeigten Situation wird die Spülluft durch eine Reckstange 12 hindurch, genauer über einen Boden 12a der Reckstange 12, in das Behältnis 10 eingebracht. In dieser Phase wird der Boden 10a des Behältnisses aktiv von innen gekühlt. Die Gasbereitstellungseinrichtung 22 wird hier direkt von einem Kompressor (nicht gezeigt) gespeist. Auch bei dem nunmehr vorgeschlagenen Verfahren wird das Behältnis wie zuvor mittels Vor- und Fertigblasen hergestellt, allerdings stammt nunmehr die Blasluft nicht unmittelbar von einem Kompressor, sondern sie wird umgeleitet. Genauer gesagt wird die Blasluft von einem Kompressor in die erste Gasbereitstellungseinrichtung 22 geführt. Von dort wird die Blasluft über die Spül- bzw. Reckstange 12, die bevorzugt nur in dem Bodenbereich 12a eine Öffnung hat, durch die schon fertig ausgeformten Behältnisse in der Druck- und Kühlphase zu einem Fertigblaskanal 24, d.h. zu der zweiten Gasbereitstellungseinrichtung 24, geleitet. Die Luft wird dabei zwischen einem Außenumfang 12b der Reckstange 12 und einer Innenwandung der Mündung 10b des Behältnisses 10 geführt.

Bei einer derartigen Einspeisung speist diese erste Bereitstellungseinrichtung 22 die drei mit den Buchstaben D, E und F gekennzeichneten Umformungsstationen über das Behältnis selbst. Die Behältnisse 10 stehen andererseits unter dem Fertigblasdruck (ausgehend von der zweiten Gasbereitstellungseinrichtung 24), es herrscht also im Wesentlichen das gleiche Druckniveau in der ersten Gasbereitstellungseinrichtung 22, in den Behältnissen (während der Druck- und Kühlphase) und dem Fertigblaskanal bzw. der zweiten Gasbereitstellungseinrichtung 24. In diesem Falle liegt eine Art offenes System vor, wenn Luft strömt. Andererseits kann auch nur so viel Luft durch die Behältnisse strömen, wie sie zur Herstellung der Behältnisse über die zweite Gasbereitstellungseinrichtung 24, d.h. den Fertigblaskanal, verbraucht wird.

Dieser Vorgang ist durch die durchgezogenen Pfeile V1 bis V5 dargestellt.

Während des Entlastungsvorgangs, d.h. hier in der Umformungsstation, die mit dem Buchstaben G gekennzeichnet ist, kann Luft einerseits zunächst beispielsweise wieder über die Reck- bzw. Spülstange 12 aus dem Behältnis herausströmen, genauer gesagt durch den in der Reckstange befindlichen Kanal 14, und somit bevorzugt in den Zwischenblaskanal recycelt werden. Diese Strömung ist hier durch die Pfeile R1 bis R3 dargestellt. Auf diese Weise kann nochmals eine Kühlwirkung im Bodenbereich 10a des Behältnisses erzeugt werden. Die so austretende Luft wird über eine weitere Gasbereitstellungseinrichtung 26 (sogenannte Air Wizzards) aufgefangen und kann in bekannter Weise weiter verarbeitet werden. Andererseits kann die Luft aus dem Behältnis auch in einen Auslasskanal entlastet werden. Diese Luft kann dann über die Behältnismündung geleitet werden. Anschließend gelangt die Luft aus dem Fertigblaskanal in die mit dem Buchstaben C gekennzeichnete zweite Umformungsstation 6 und wird in diesem Bereich auch zum Ausformen des Behältnisses mitverwendet.

Um generell eine möglichst hohe Effizienz der Blasluft zu gewährleisten, ist es möglich, die jeweilige Entlastungsluft (Umformungsstation G) über Air-Wizard-Systeme bzw. Recyclingsysteme aufzufangen. Der Luftverbrauch wird dadurch nicht erhöht, sondern nur effektiver genutzt, da eine Durchleitung durch die bereits fertigen Behältnisse 10 geführt wird, um neue Behältnisse herzustellen. Weiterhin kann eine Parallelisierung der Luftwege erreicht werden, da mehrere Spül- bzw. Reckstangen 12 gleichzeitig arbeiten können. Auf diese Weise wird der Luftverbrauch auch nicht erhöht. Durch die erfindungsgemäße Vorrichtung kann somit eine Bodennachkühlung der Kunststoffbehältnisse ohne zusätzlichen Luftverbrauch generiert werden.

Durch die immer höheren Stationsleistungen wird automatisch auch die Kühlzeit in der Station während eines Blasprozesses immer kürzer. Die Erfindung erlaubt eine höhere Bodenstabilität, weil die eigentliche Geometrie der Bodenform besser erhalten bleibt. Die Kühlwirkung ist durch den Doppeleffekt, d.h. eine Kühlung von innen und außen, (durch die Strömung der Luft durch die Reckstange in beide Richtungen) wesentlich effizienter und somit findet nahezu keine Verformung der Bodengeometrie mehr statt.

Auch eine Wasserbenetzung der Behältnisaußenhaut kann entfallen, was besonders bei miteinander geblockten bzw. synchronisierten Maschinen von Vorteil ist. Der Behältnisboden 10a sollte auch andererseits vor einer Etikettiermaschine (insbesondere bei sogenannten CSD-Behältnissen) gekühlt werden, was bislang über eine Bodennachkühlung mit Wasser erfolgt. Diese mit Wasser benetzten Flaschen können nur schwer etikettiert werden.

Vorzugsweise ist die in Fig. 2 dargestellte Reck- bzw. Spülstange mehrteilig und bevorzugt wenigstens zweiteilig ausgebildet. Dabei ist es möglich, dass diese Reckstange 12 ein Hauptsegment aufweist, welches immer gleich ausgebildet sein kann. Ein entsprechendes Ausformsegment, bzw. Preformsegment, kann mittels eines geeigneten Verschlusses, beispielsweise eines Bajonettverschlusses wechselbar ausgebildet sein. Dieser Teil der Spül- bzw. Reckstange ist der in Fig. 2 gezeigte Bereich, der auch in den Kunststoffvorformling eintaucht.

Grundsätzlich wäre es auch möglich, einteilige Spül- bzw. Reckstangen zu verwenden, welche jedoch dann üblicherweise einen standardisierten Durchmesser (beispielsweise von 14 mm) aufweisen. Mit diesen Durchmessern kann jedoch die Reckstange bzw. Spülstange nicht in alle Kunststoffvorformlinge eingetaucht werden und daher bietet sich hier eine teilbare bzw. zusammensetzbare Spülstange an. Das in Fig. 2 gezeigte Preformsegment der Reck- bzw. Spülstange kann dabei mit variablen Durchmessern, beispielsweise 8, 10,12 und 14 mm, vorgesehen sein. Auf diese Weise können auch Kunststoffvorformlinge mit unterschiedlichen Querschnitten bzw. Durchmessern gefertigt werden.

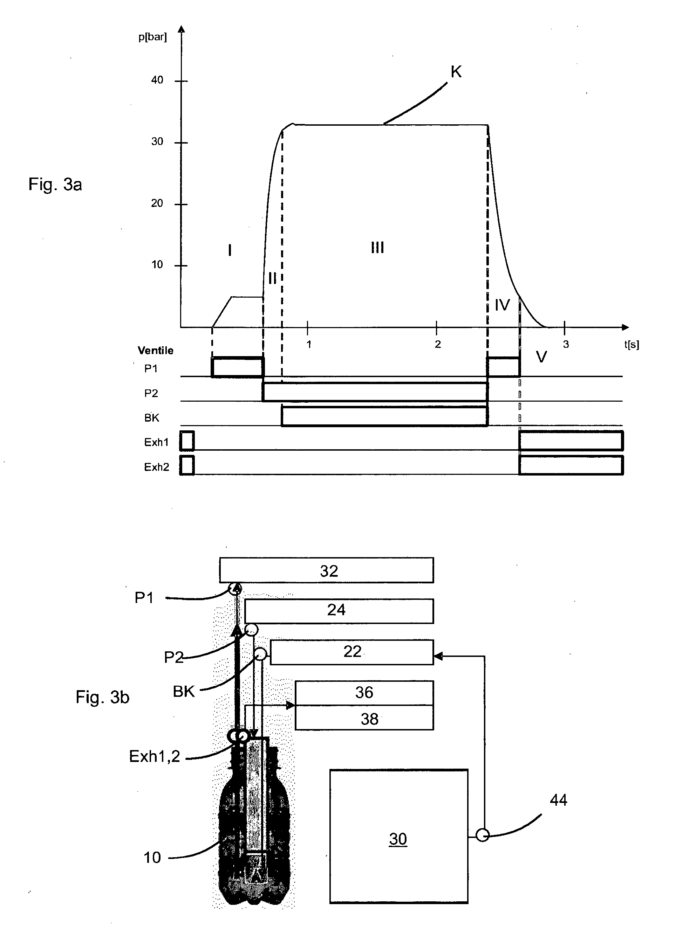

Die Figuren 3a und 3b zeigen eine Veranschaulichung eines erfindungsgemäßen Verfahrens. Dabei bezieht sich die Kurve K auf einen Druckverlauf innerhalb der Kunststoffvorformlinge während eines Blasformvorgangs. Der Blasformvorgang weist hier mehrere Phasen bzw. Abschnitte I bis V auf. Die Bezugszeichen P1, P2, BK, Exh1 und Exh2 kennzeichnen mehrere Ventile, nämlich die Ventile für einen Vorblasdruck (P1), für einen Fertigblasdruck (P2), d.h. die zweite Gasbereitstellungseinrichtung 24, das Ventil für den Bereitstellungskanal (BK) und zwei Auslassventile Exh1 und Exh2. Während des Blasprozesses wird zunächst in einem Verfahrensstadium I ein Vorblasen des Behältnisses vorgenommen. In diesem Bereich steigt der Druck bis auf ein Niveau von ca. 3-7 bar an. Anschließend wird in einem relativ kurzen Abschnitt II ein vollständiges Ausformen der Behältnisse vorgenommen, dies entspricht der in Fig. 2 dargestellten Umformungsstation 6, welche auch mit dem Zeichen C versehen ist. In einer weiteren längeren Phase III wird ein bestimmter Druck in dem Behältnis aufrechterhalten, um dieses zu stabilisieren. Dies entspricht in Fig. 2 den Umformungsstationen D, E und F. Neben den gezeigten Ventilen bzw. Kanälen kann auch noch ein weiterer Kanal vorgesehen sein, der ein (bevorzugt in den Umformungsstationen befindliches) Druckkissen mit Druckluft versorgt. Derartige Druckkissen werden eingesetzt, um die beiden Blasformteile während des Expansionsprozesses stärker zusammen zu drücken.

Anschließend wird das Behältnis entlastet (Stadium 4) und schließlich kann in dem letzten Stadium 5 noch verbleibende Luft über ein Auslassventil abgegeben werden. Die Rechtecke in den jeweiligen Figuren 3a, 4a, 5a, 6a, 7a und 8a veranschaulichen jeweils den Zustand, in dem die jeweiligen Ventile geöffnet sind. Ein Unterschied zum Stand der Technik ist insbesondere in Abschnitt 3 erkennbar, in dem das Behältnis sowohl über den Fertigblaskanal (an der Reckstange vorbei) - d.h über die zweite Gasbereitstellungseinrichtung - mit Druckluft versorgt wird als auch über die erste Gasbereitstellungseinrichtung 22 (durch die Reckstange hindurch), wobei zwischen den beiden Zuführungen ein annäherndes Gleichgewicht besteht.

Allgemein wird im Rahmen dieser Anmeldung unter einer Gasbereitstellungseinrichtung eine Einrichtung verstanden, welche ein Gas, insbesondere Luft, insbesondere als Arbeitsgas, bereitstellen kann. Bevorzugt kann diese Gasbereitstellungseinrichtung das Gas unter einem oberhalb des atmosphärischen Drucks liegenden Druck bereitstellen. Vorteilhaft sind die hier beschriebenen Gasbereitstellungseinrichtungen daher auch als Gasreservoirs ausgeführt, welche Gas - insbesondere auch unter dem oben erwähnten Druck - speichern können.

Im unteren Teilbild ist schematisch ein Kompressor 30 dargestellt sowie diverse Reservoirs bzw. Kanäle. Im Einzelnen bezeichnet das Bezugszeichen 32 einen Vorblaskanal, das Bezugszeichen 24 einen Fertigblaskanal bzw. die zweite Gasbereitstellungseinrichtung, das Bezugszeichen 22 den ersten Gasbereitstellungskanal und die Bezugszeichen 36 und 38 jeweils Auslasskanäle. Der Kompressor versorgt hier den Bereitstellungskanal 22 mit Blasluft.

Das Bezugszeichen 44 kennzeichnet ein Ventil, mit dem die Zuführung der Blasluft zu der ersten Gasbereitstellungseinrichtung gesteuert werden kann.

Somit bezieht sich Fig. 3a auf einen kontinuierlichen Arbeitsbetrieb der Anlage. Man erkennt, dass zunächst das Ventil P1 für den Vorblaskanal geöffnet wird und anschließend zu Beginn des Abschnitts II auch das Ventil für den Fertigblaskanal geöffnet wird. Sobald ein Maximaldruck erreicht wird, wird nunmehr auch das Ventil BK für den Bereitstellungskanal geöffnet. Diese beiden Ventile werden während des Stabilisierens des Behältnisses jeweils geöffnet gehalten und weisen, wie oben erwähnt, ähnliche Drücke auf, wobei jedoch bevorzugt der Druck in dem Bereitstellungskanal geringfügig höher ist, sodass eine Strömung hin zu dem Fertigblaskanal bzw. der zweiten Gasbereitstellungseinrichtung 24 stattfinden kann.

Nach dem Ende des Abschnitts III werden sowohl das Ventil P2, als auch das Ventil BK, geschlossen und andererseits wieder das Ventil P1 geöffnet, sodass Luft wieder zurück in den Vorblaskanal 32 strömen kann. Auf diese Weise kann ein Luftdruckrecycling erreicht werden. Ab dem Abschnitt V wird auch das Ventil P1 geschlossen und weiterhin die beiden Auslassventile Exh1 und Exh2 geöffnet. Diese Restluft kann aus dem System nach außen abgegeben werden. Der Druck in dem Vorblaskanal ist geringer als derjenige in der ersten und der zweiten Gasbereitstellungseinrichtung 22, 24.

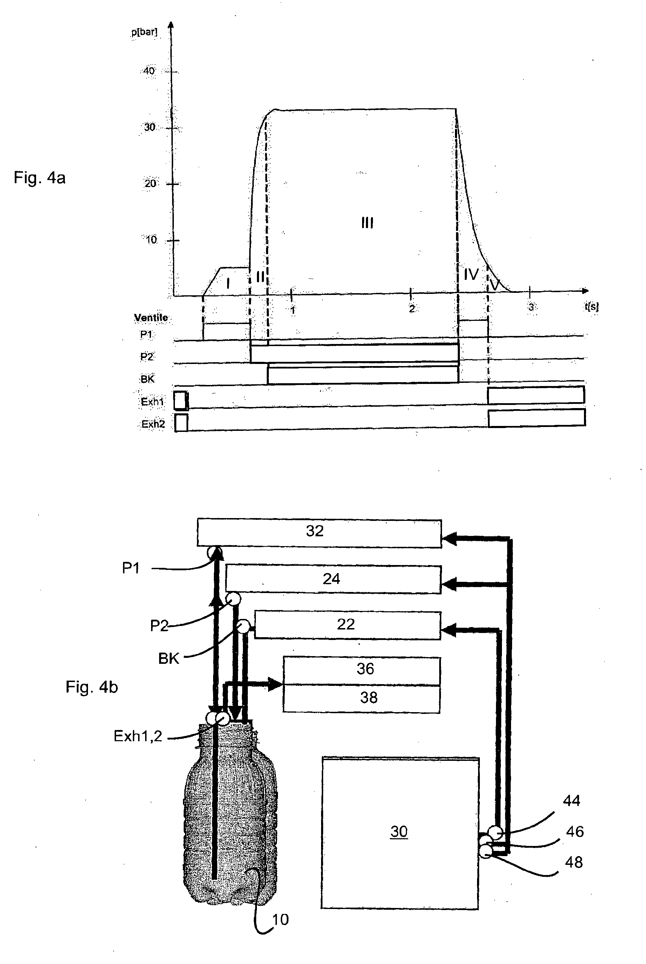

Die Figuren 4a, 4b zeigen den Sonderfall, in dem gerade der Arbeitsbetrieb aufgenommen wird, bzw. ein erstes Behältnis ausgeformt wird. In dieser Situation werden von dem Kompressor 30 alle Kanäle 32, 24 und 22 mit Druckluft versorgt, um ein bestimmtes Druckniveau zu erreichen. Der eigentliche in Fig. 4a dargestellte Arbeitsprozess entspricht jedoch dem auch unter Bezugnahme auf Fig. 3a beschriebenen Arbeitsprozess. Hier können zusätzlich Ventile 44, 46, 48 zwischen dem Kompressor 30 und der ersten und/oder zweiten Gasbereitstellungseinrichtung 24, 22 und dem Vorblaskanal 32 angebracht werden, um die Druckluftspeisung der Kanäle zu steuern.

Neben dem Ventil 44 sind hier auch die Ventile 46 und 48 dargestellt, welche die Luftversorgung zu der zweiten Gasbereitstellungseinrichtung 24 und dem Kanal 32 steuern.

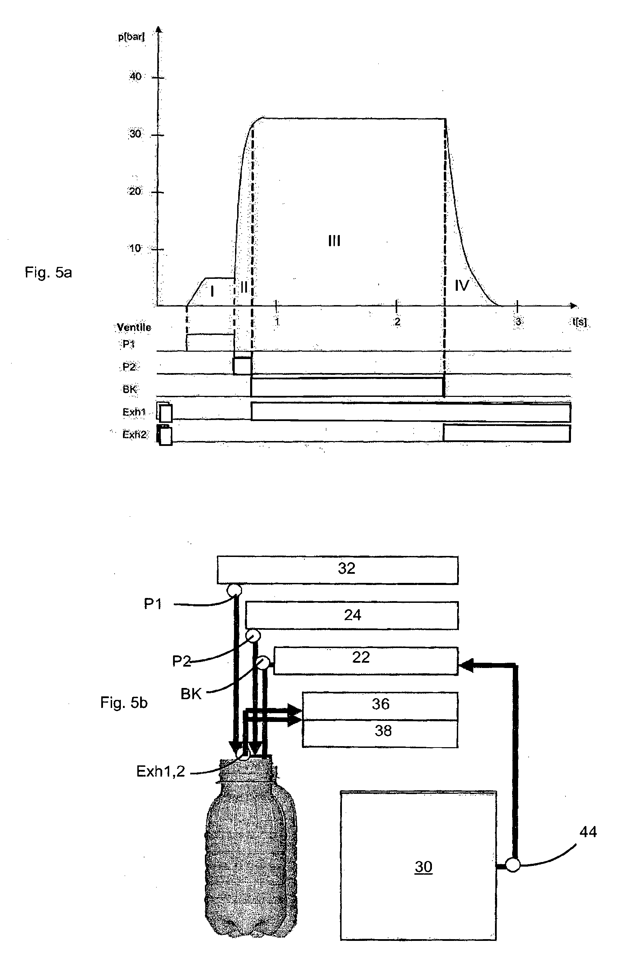

Die Figuren 5a und 5b zeigen den Sonderfall der Expansion des letzten Behältnisses. In dieser Situation versorgt der Kompressor 30 lediglich die erste Gasbereitstellungseinrichtung 22 mit Druckluft, d.h. den Bereitstellungskanal. In dieser Situation ist jedoch die Beschaltung der Ventile P1, P2, BK, Exh1 und Exh2 modifiziert. Während auch hier zu Beginn des Blasprozesses lediglich das Ventil P1 geöffnet wird, wird bei dem letzten Behältnis das Ventil P2 nur während der Sektion II geöffnet und anschließend wieder geschlossen und das Ventil für die erste Gasbereitstellungseinrichtung 22 während der Sektion III geöffnet. Um auch hier eine gewisse Strömung durch das Behältnis zu erreichen, wird in der Sektion III auch das erste Auslassventil Exh1 geöffnet. Nach dem Ausformen des Behältnisses wird zusätzlich auch das Auslassventil Exh2 geöffnet.

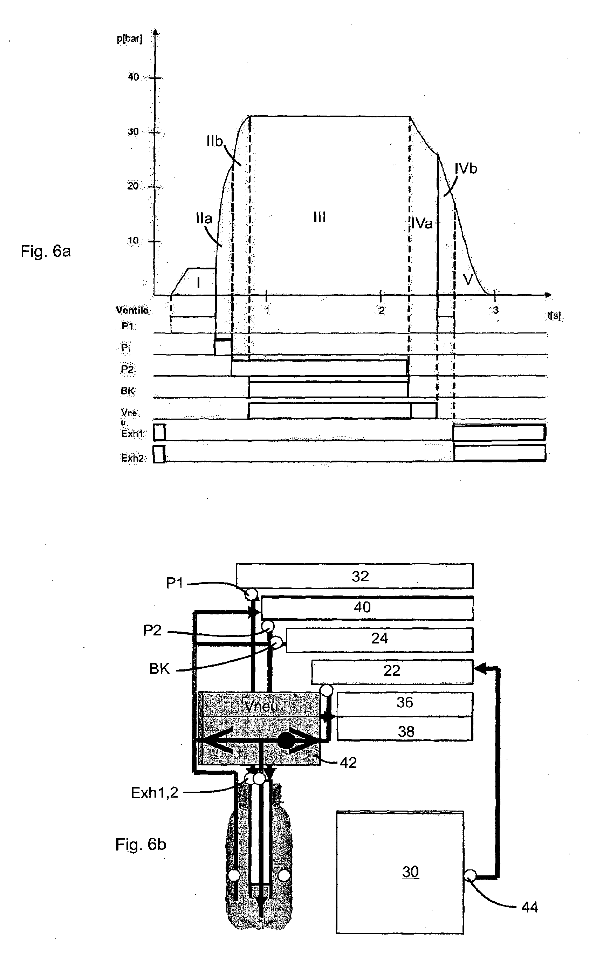

Die Figuren 6a und 6b zeigen einen weiteren modifizierten Verfahrensablauf. Im Einzelnen ist hier die Sektion II in zwei Teilsektionen IIa und IIb unterteilt und auch die Sektion IV ist unterteilt in die Sektionen IVa und IVb. Im Abschnitt IVa findet dabei hier bevorzugt eine Rückwärtsbewegung der Blasluft durch die Spül- bzw. Reckstange statt. Vorrichtungsseitig weist die Vorrichtung hier neben den bisher schon erwähnten Kanälen auch noch einen zusätzlichen Kanal 40 auf. Dieser Kanal wird im Folgenden als PI-Kanal bezeichnet. Diesem Kanal ist auch ein eigenes Ventil PI zugeordnet. Daneben ist hier auch ein zusätzliches Ventil 42 vorgesehen. Dieses Ventil kann in Richtung der ersten Gasbereitstellungseinrichtung als Rückschlagventil ausgestattet sein. Weiterhin ist es auch möglich, dass dieses Ventil 42 zwei unterschiedliche Schaltstellungen erlaubt, wobei in der Schaltstellung 1 Strömung aus dem Behältnis in die zweite Gasbereitstellungseinrichtung 24 möglich ist und in der Schaltstellung 2 eine Strömung aus dem Behältnis in den PI-Kanal 40 möglich ist. Der in dem Behältnis verbliebene Restdruck kann in bekannter Weise verarbeitet werden. Insbesondere kann dieser Restdruck in den Vorblaskanal 32 geleitet bzw. recycelt werden. Der anschließend in dem Behältnis vorhandene Restdruck kann anschließend über die Auslasskanäle 36, 38 geleitet werden, wobei ein gleichzeitiges Öffnen beider Auslasskanäle 36, 38 bevorzugt wird.

Auch in dem in Fig. 6a gezeigten Diagramm wird dies deutlich, wobei hier in dem Abschnitt IIa lediglich das Ventil PI geöffnet wird und in dem Abschnitt III das Ventil 42 derart geschaltet ist, dass Luft aus dem Behältnis einerseits in die zweite Gasbereitstellungseinrichtung 24 und andererseits in den PI-Kanal gelangen kann. In dem Bereich IVa wird das Ventil 42 umgeschaltet und Luft kann nunmehr in den PI-Kanal 40 gelangen. In dieser Phase kann eine Rückwärtsbewegung durch die Reckstange 12 und auf diese Weise auch eine weitere Kühlung des Bodens vorgenommen werden.

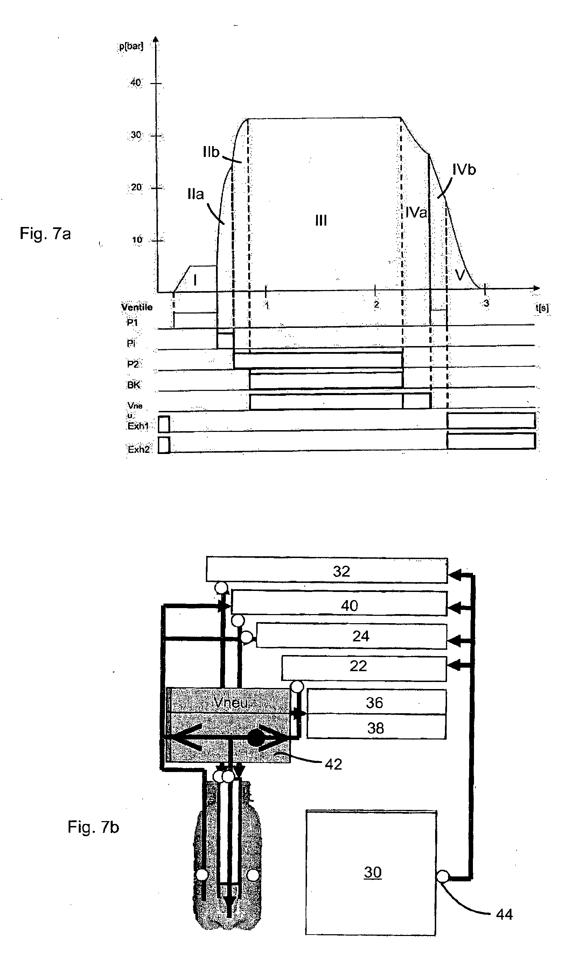

Die Figuren 7a und 7b zeigen wiederum eine Darstellung, ähnlich der in der Fig. 4a gezeigten Situation, d.h. der Arbeitsbetrieb der Maschine wird gerade aufgenommen, wobei jedoch auch hier der zusätzliche PI-Kanal 40 vorgesehen ist. Es wird daher für einen Verfahrensablauf auf die Beschreibung zu Fig. 4a verwiesen. Zunächst wird der Vorblaskanal 32 direkt vom Kompressor 30 gespeist, das Behältnis demnach zuerst vorgeblasen. Anschließend speist der Kompressor 30 den PI-Kanal 40, welcher das Behältnis weiter expandiert. Um das Behältnis vollständig zu expandieren, speist der Kompressor 30 die zweite Gasbereitstellungseinrichtung 24. Im Anschluss daran speist der Kompressor 30 die erste Gasbereitstellungseinrichtung 22, von welcher aus die Luft in der ersten Schaltstellung des Ventils Vneu durch das Behältnis hindurch in die zweite Gasbereitstellungseinrichtung 24 geleitet wird. Dadurch entsteht eine kontinuierliche und ruhige Kühlwirkung am Boden des Behältnisses. In der darauffolgenden zweiten Schaltstellung des Ventils Vneu wird ein weiterer Teil des im Behältnis verbliebenen Restdrucks bevorzugt in den PI-Kanal 40 recycelt. Die Strömung der Luft verläuft dabei aus dem Behältnis durch die Spülstange in den PI-Kanal 40. Anschließend wird der weiterhin im Behältnis vorhandene Restdruck in bekannter Weise weiterverarbeitet, z.B. durch Recyceln der Luft in den Vorblaskanal 32. Der zuletzt im Behältnis vorhandene Restdruck kann jetzt über die Behältnismündung zu den Auslasskanälen 36, 38 geleitet werden.

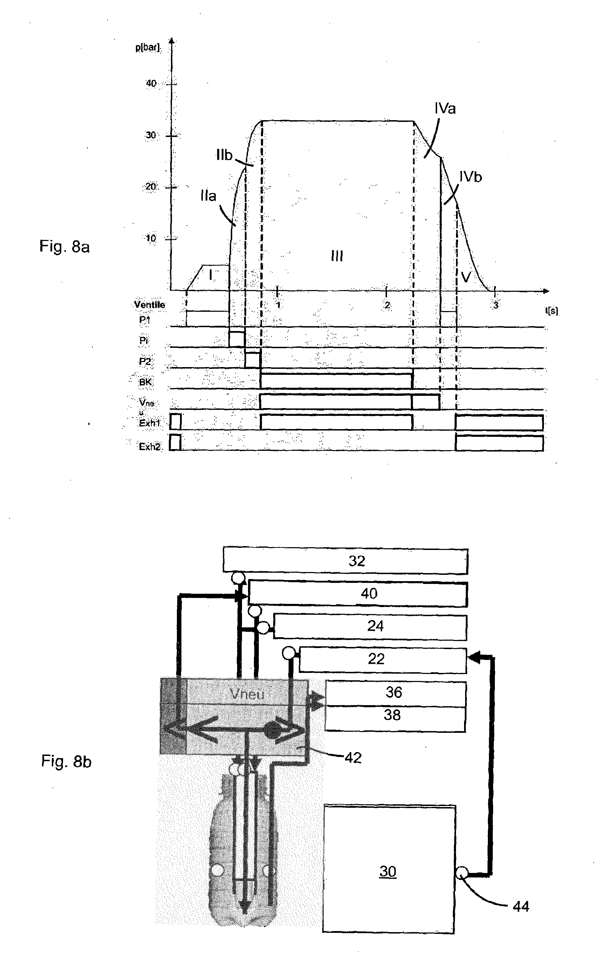

Die Figuren 8a und 8b zeigen wiederum eine Situation ähnlich der in Fig. 5a und 5b gezeigten Situation, also das letzte zu expandierende Behältnis im Produktionslauf, hier jedoch wiederum für eine Vorrichtung mit dem zusätzlichen PI-Kanal. Es wird daher ebenfalls auf die obige Figurenbeschreibung (Fig. 5a, 5b) verwiesen. Das Behältnis wird wie in Fig. 5a und 5b zunächst durch den Vorblaskanal 32, den PI-Kanal 40 und die zweite Gasbereitstellungseinrichtung 24 expandiert. Anschließend schaltet das Ventil Vneu in die erste Schaltstellung, so dass die Luft der ersten Gasbereitstellungseinrichtung 22, die direkt vom Kompressor 30 gespeist wird, durch das Behältnis in den bereits geöffneten Auslasskanal 36 geleitet wird. Dadurch wird einerseits die geforderte Kühlwirkung des Bodens erreicht, und andererseits eine Umleitung in den Auslasskanal 36 erreicht. Der Auslasskanal 36 ist dabei bevorzugt so ausgestaltet, dass eine kontinuierliche und ruhige Luftströmung und damit Behältniskühlung erreicht wird. In der zweiten Schaltstellung des Ventils Vneu wird die im Behältnis befindliche Luft zunächst in den PI-Kanal 40 recycelt. Diese Strömung findet bevorzugt rückwärts über die Spülstange statt. Anschließend kann in bekannter Weise, insbesondere kann in den Vorblaskanal 32 recycelt werden. Im Anschluss daran werden bevorzugt beide Auslasskanäle 36, 38 gleichzeitig geöffnet, um das Behältnis vollständig zu entlasten. Bevorzugt sind daher die beiden Auslasskanäle derart gestaltet, dass sie eine unterschiedliche Strömungsmenge und/oder Strömungsgeschwindigkeiten für das austretende Gas zulassen. Vorteilhaft lässt der Auslasskanal 38 einen schnelleren Auslass des austretenden gasförmigen Mediums zu (bzw. weist einen größeren Strömungsquerschnitt auf) als der Auslasskanal 36.

Die Anmelderin behält sich vor, die in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Blasformmaschine
- 4: erste Umformungsstation
- 6: zweite Umformungsstation
- 10: Behältnis
- 10a: Behältnisboden
- 12: Reck-/Spülstange
- 12a: Boden der Reck/Spülstange
- 12b: Aussenumfang der Reck/Spülstange
- 14: Blasrad
- 22: erste Gasbereitstellungseinrichtung
- 24: zweite Gasbreitstellungseinrichtung
- 26: dritte Gasbereitstellungseinrichtung
- 30: Kompressor
- 32: Vorblaskanal
- 36, 38: Auslasskanäle
- 40: PI-Kanal
- 42: Ventil
- 44, 46, 48: Ventil
- 120: Reservoir

- A-H: Stationen eines Verfahrensablaufs
- V1-V6: Luftströmung während der Einspeisung
- R1-R4: Luftströmung während des Entlastungsvorgangs
- K: Kurve
- P1: Ventil für Vorblasdruck
- P2: Ventil für Fertigblasdruck
- BK: Ventil für erste Bereitstellungseinrichtung
- Exh1, Exh2: Auslassventile
- I-V: Verfahrensstadien, Abschnitte
- IIa, IIb: Unterteilung von Abschnitt II
- IVa, IVb: Unterteilung von Abschnitt IV

## Patentansprüche

1. Vorrichtung (1) zum Expandieren von Kunststoffbehältnissen (10) mit einer Transporteinrichtung (14), welche die Kunststoffbehältnisse (10) entlang eines vorgegebenen Transportpfads transportiert, mit wenigstens einer ersten an der Transporteinrichtung (2) angeordneten und von der Transporteinrichtung (2) transportierten Umformungsstation (4), welche die Kunststoffbehältnisse (10) durch Beaufschlagung mit einem gasförmigen Medium expandiert, mit wenigstens einer zweiten an der Transporteinrichtung (2) angeordneten und von der Transporteinrichtung (2) transportierten Umformungsstation (6) welche die Kunststoffbehältnisse durch Beaufschlagung mit einem gasförmigen Medium expandiert, wobei die erste Umformungsstation (4) und die zweite Umformungsstation (6) jeweils Reckstangen (12) zum Dehnen der zu expandierenden Kunststoffbehältnisse (10) in deren Längsrichtungen aufweisen und diese Reckstangen jeweils einen Kanal aufweisen, über welchen den zu expandierenden Kunststoffbehältnissen (10) durch die Reckstange (12) hindurch ein gasförmiges Medium zuführbar ist und mit wenigstens einer ersten Gasbereitstellungseinrichtung (22), welche der ersten Umformungsstation (4) wenigstens zeitweise ein unter Druck stehendes gasförmiges Medium zur Verfügung stellt, wobei dieses gasförmige Medium diesem in der ersten Umformungsstation (4) zu expandierenden Kunststoffbehältnissen (10) wenigstens zeitweise durch die Reckstange (12) hindurch zuführbar ist,
**dadurch gekennzeichnet, dass**
die Vorrichtung (1) eine zweite Gasbereitstellungseinrichtung (24) aufweist, welche mit einem Innenraum des in der ersten Umformungsstation (4) zu expandierenden Kunststoffbehältnisses (10) derart in Strömungsverbindung steht, dass ein zwischen der zweiten Gasbereitstellungseinrichtung (24) und dem Innenraum der Kunststoffbehältnisse (10) strömendes Gas zwischen der Reckstange (12) und einer Wandung der Kunststoffbehältnisse (10) strömt, wobei die erste Gasbereitstellungseinrichtung (22) und die zweite Gasbereitstellungseinrichtung (24) über den Innenraum des in der ersten Umformungsstation (4) angeordneten Kunststoffbehältnisses (10) wenigstens zeitweise in Strömungsverbindung stehen und diese zweite Gasbereitstellungseinrichtung (24) auch in Strömungsverbindung mit einem in der zweiten Umformungsstation (6) befindlichen Kunststoffbehältnis (10) steht, und wobei die Druckverhältnisse der ersten Gasbereitstellungseinrichtung (22) und der zweiten Gasbereitstellungseinrichtung (24) derart gewählt sind, dass wenigstens zeitweise eine Gasströmung von der zweiten Gasbereitstellungseinrichtung (24) zu der ersten Gasbereitstellungseinrichtung (22) erfolgt.

2. Vorrichtung (1) nach Anspruch 1,
**dadurch gekennzeichnet, dass**
die Druckverhältnisse der ersten Gasbereitstellungseinrichtung (22) und der zweiten Gasbereitstellungseinrichtung (24) derart gewählt sind, dass sich die von diesen Gasbereitstellungseinrichtungen zur Verfügung gestellten Drücke um weniger als 30%, bevorzugt um weniger als 20% und bevorzugt um weniger als 10% voneinander unterscheiden.

3. Vorrichtung (1) nach wenigstens einem der vorangegangenen Ansprüche,
**dadurch gekennzeichnet, dass**
die zweite Umformungsstation (6) bezogen auf die Transportbewegung der Kunststoffbehältnisse (10) der ersten Umformungsstation (4) nachgeordnet ist.

4. Vorrichtung (1) nach wenigstens einem der vorangegangenen Ansprüche,
**dadurch gekennzeichnet, dass**
die erste Gasbereitstellungseinrichtung (22) zeitweise das unter Druck stehende gasförmige Medium zur Expansion und/oder Stabilisierung eines in der zweiten Umformungsstation (6) zu expandierenden Kunststoffbehältnisse (10) zur Verfügung stellt.

5. Vorrichtung (1) nach Anspruch 4,
**dadurch gekennzeichnet, dass**
die Vorrichtung (1) eine Steuerungseinrichtung aufweist, welche bewirkt, dass der Zeitraum, in dem die erste Gasbereitstellungseinrichtung (22) der ersten Umformungsstation (4) das gasförmige Medium zur Verfügung stellt und der Zeitraum, in dem die erste Gasbereitstellungseinrichtung (22) der zweiten Umformungsstation (6) das gasförmige Medium zur Verfügung stellt, wenigstens teilweise versetzt sind.

6. Vorrichtung (1) nach wenigstens einem der vorangegangenen Ansprüche,
**dadurch gekennzeichnet, dass**
die Vorrichtung (1) eine Vielzahl von Umformungsstationen aufweist, und sämtliche Umformungsstationen wenigstens zeitweise mit der ersten Gasbereitstellungseinrichtung (22) in Strömungsverbindung stehen.

7. Vorrichtung (1) nach wenigstens einem der vorangegangenen Ansprüche,
**dadurch gekennzeichnet, dass**
wenigstens eine Gasbereitstellungseinrichtung (22, 24) ein Ringkanal ist.

8. Vorrichtung (1) nach wenigstens einem der vorangegangenen Ansprüche,
**dadurch gekennzeichnet, dass**
wenigstens eine Reckstange (12) eine Gasaustrittsöffnung in einem Endabschnitt der Reckstange (12) aufweist.

9. Verfahren zum Expandieren von Kunststoffbehältnissen, wobei die Kunststoffbehältnisse mittels einer Vielzahl von Umformungsstationen (4, 6) durch Beaufschlagung mit einem gasförmigen Medium expandiert werden und wobei von einer ersten Gasbereitstellungseinrichtung (22) das gasförmige Medium zur Verfügung gestellt wird und einem in einer ersten Umformungsstation (4) befindlichen Kunststoffbehältnis wenigstens zeitweise durch eine Reckstange (12) hindurch zugeführt wird,
**dadurch gekennzeichnet, dass**
wenigstens zeitweise während der Zuführung des gasförmigen Mediums zu dem in der ersten Umformungsstation (4) befindlichen Kunststoffbehältnis diese erste Umformungsstation (4) in einer Strömungsverbindung mit einer zweiten Gasbereitstellungseinrichtung (24) steht und diese zweite Gasbereitstellungseinrichtung (24) wenigstens zeitweise in Strömungsverbindung mit einer zweiten Umformungsstation (6) steht, wobei diese Strömungsverbindung abschnittsweise zwischen der Reckstange (12) und einer Mündung des Behältnisses (10) verläuft.

10. Verfahren nach Anspruch 9,
**dadurch gekennzeichnet, dass**
die Zuführung des gasförmigen Mediums durch die Reckstange (12) zur Stabilisierung eines Behältnisabschnitts auf diesen Behältnisabschnitt gerichtet wird.

11. Verfahren nach Anspruch 9,
**dadurch gekennzeichnet, dass**
das Behältnis (10) bereits vor der Zuführung des gasförmigen Mediums durch die Reckstange (12) durch Beaufschlagung mit dem gasförmigen Medium expandiert wird.

12. Verfahren nach wenigstens einem der vorangegangenen Ansprüche,
**dadurch gekennzeichnet, dass**
das Behältnis (10) nach dessen Expansion druckentlastet wird wobei diese Druckentlastung wenigstens zeitweise durch die Reckstange (12) hindurch erfolgt.

13. Verfahren nach wenigstens einem der vorangegangenen Ansprüche,
**dadurch gekennzeichnet, dass**
die Expansion eines Kunststoffbehältnisses (10) in der ersten Umformungsstation (4) und die Expansion eines Kunststoffbehältnisses (10) in der zweiten Umformungsstation (6) zeitversetzt erfolgen.

14. Verfahren nach wenigstens einem der vorangegangenen Ansprüche,
**dadurch gekennzeichnet, dass**
zumindest während eines Fertigblasens eines Behältnisses (10) und/oder während eines Spülens des Behältnisses (10) im Wesentlichen das gleiche Druckniveau in der ersten Gasbereitstellungseinrichtung (22), in dem Behältnis (10) und der zweiten Gasbereitstellungseinrichtung (24) herrscht.

## Claims

1. An apparatus (1) for the expansion of plastics material containers (10) with a conveying device (14) which conveys the plastics material containers (10) along a pre-set conveying path, with at least one first shaping station (4) which is arranged on the conveying device (2) and is conveyed by the conveying device (2) and which expands the plastics material containers (10) by acting upon them with a gaseous medium, with at least one second shaping station (6) which is arranged on the conveying device (2) and is conveyed by the conveying device (2) and which expands the plastics material containers by acting upon them with a gaseous medium, wherein the first shaping station (4) and the second shaping station (6) have stretch rods (12) in each case for rotating the plastics material containers (10) to be expanded in the longitudinal directions thereof and these stretch rods have in each case a channel by way of which a gaseous medium is capable of being supplied through the stretch rod (12) to the plastics material containers (10) to be expanded, and with at least one first gas preparation device (22) which makes a gaseous medium under pressure available at least for a time to the first shaping station (4), wherein this gaseous medium is capable of being supplied at least for a time through the stretch rod (12) to these plastics material containers (10) to be expanded in the first shaping station (4), **characterized in that** the apparatus (1) has a second gas preparation device (24) which is connected in terms of flow to an inner space of the plastics material container (10) to be expanded in the first shaping station (4), in such a way that a gas flowing between the second gas preparation device (24) and the inner space of the plastics material containers (10) flows between the stretch rod (12) and a wall of the plastics material containers (10), wherein the first gas preparation device (22) and the second gas preparation device (24) are connected in terms of flow at least for a time by way of the inner space of the plastics material container (10) arranged in the first shaping station (4) and this second gas preparation device (24) is also connected in terms of flow to a plastics material container (10) present in the second shaping station (6), and wherein the pressure ratios of the first gas preparation device (22) and of the second gas preparation device (24) are selected in such a way that a gas flow from the second gas preparation device (24) to the first gas preparation device (22) takes place at least for a time.

2. An apparatus (1) according to claim 1, **characterized in that** the pressure ratios of the first gas preparation device (22) and of the second gas preparation device (24) are chosen in such a way that the pressures made available by these gas preparation devices differ from one another by less than 30 %, preferably by less than 20 % and preferably by less than 10 %.

3. An apparatus (1) according to at least one of the preceding claims, **characterized in that** the second shaping station (6) is arranged downstream of the first shaping station (4) with respect to the conveying movement of the plastics material containers (10).

4. An apparatus (1) according to at least one of the preceding claims, **characterized in that** the first gas preparation device (22) for a time makes the gaseous medium under pressure available for the expansion and/or stabilization of a plastics material container (10) to be expanded in the second shaping station (6).

5. An apparatus (1) according to claim 4, **characterized in that** the apparatus (1) has a control device which has the effect that the period of time in which the first gas preparation device (22) makes the gaseous medium available to the first shaping station (4) and the period of time in which the first gas preparation device (22) makes the gaseous medium available to the second shaping station (6) are staggered at least in part.

6. An apparatus (1) according to at least one of the preceding claims, **characterized in that** the apparatus (1) has a plurality of shaping stations, and all the shaping stations are connected in terms of flow to the first gas preparation device (22) at least for a time.

7. An apparatus (1) according to at least one of the preceding claims, **characterized in that** at least one gas preparation device (22, 24) is an annular channel.

8. An apparatus (1) according to at least one of the preceding claims, **characterized in that** at least one stretch rod (12) has a gas outlet opening in an end portion of the stretch rod (12).

9. A method of expanding plastics material containers, wherein the plastics material containers are expanded by means of a plurality of shaping stations (4, 6) by being acted upon with a gaseous medium and wherein the gaseous medium is made available by a first gas preparation device (22) and is supplied at least for a time through a stretch rod (12) to a plastics material container present in a first shaping station (4), **characterized in that** the first shaping station (4) is connected in terms of flow to a second gas preparation device (24) at least for a time during the supply of the gaseous medium to the plastics material container present in this first shaping station (4) and this second gas preparation device (24) is connected in terms of flow at least for a time to a second shaping station (6), wherein this flow connection extends at least in sections between the stretch rod (12) and an aperture of the container (10).

10. A method according to claim 9, **characterized in that** the supply of the gaseous medium is directed through the stretch rod (12) to a portion of the container in order to stabilize this portion of the container.

11. A method according to claim 9, **characterized in that** the container (10) is expanded even before the supply of the gaseous medium through the stretch rod (12) by being acted upon with the gaseous medium.

12. A method according to at least one of the preceding claims, **characterized in that** the container (10) is released from pressure after the expansion thereof, wherein this pressure release takes place through the stretch rod (12) at least for a time.

13. A method according to at least one of the preceding claims, **characterized in that** the expansion of a plastics material container (10) in the first shaping station (4) and the expansion of a plastics material container (10) in the second shaping station (6) take place in a manner staggered in time.

14. A method according to at least one of the preceding claims, **characterized in that** essentially the same pressure level is present in the first gas preparation device (22), in the container (10) and in the second gas preparation device (24) at least during the finishing blow moulding of a container (10) and/or during the flushing of the container (10).

## Revendications

1. Installation (1) pour l'expansion de récipients en matière plastique (10), avec un dispositif de transport (14) convoyant les récipients en matière plastique (10) le long d'un chemin de transport défini, avec au moins une première station de transformation (4) disposée contre le dispositif de transport (2) et transportée par le dispositif de transport (2), laquelle gonfle les récipients en matière plastique (10) par application d'un fluide gazeux, avec au moins une deuxième station de transformation (6) disposée contre le dispositif de transport (2) et transportée par le dispositif de transport (2), laquelle gonfle les récipients en matière plastique par application d'un fluide gazeux, la première station de transformation (4) et la deuxième station de transformation (6) comportant chacune des barres d'étirage (12) pour expanser les récipients en matière plastique (10) à expanser dans le sens de leur longueur et lesdites barres d'étirage présentant chacune un canal au moyen duquel un fluide gazeux peut être conduit vers les récipients en matière plastique (10) à expanser en traversant la barre d'étirage (12), et avec au moins un premier dispositif d'alimentation en gaz (22), lequel alimente au moins temporairement la première station de transformation (4) en fluide gazeux sous pression, ledit fluide gazeux pouvant être conduit vers les récipients en matière plastique (10) à expanser dans la première station de transformation (4) en traversant au moins temporairement la barre d'étirage (12),
**caractérisée en ce que**
ladite installation (1) comporte un deuxième dispositif d'alimentation en gaz (24), lequel est en liaison d'écoulement avec l'intérieur du récipient en matière plastique (10) à expanser dans la première station de transformation (4), de telle manière qu'un gaz circulant entre le deuxième dispositif d'alimentation en gaz (24) et l'intérieur des récipients en matière plastique (10) s'écoule entre la barre d'étirage (12) et une paroi des récipients en matière plastique (10), le premier dispositif d'alimentation en gaz (22) et le deuxième dispositif d'alimentation en gaz (24) étant au moins temporairement en liaison d'écoulement par l'intérieur du récipient en matière plastique (10) disposé dans la première station de transformation (4) et ledit deuxième dispositif d'alimentation en gaz (24) étant également en liaison d'écoulement avec un récipient en matière plastique (10) se trouvant dans la deuxième station de transformation (6), et les conditions de pression du premier dispositif d'alimentation en gaz (22) et du deuxième dispositif d'alimentation en gaz (24) étant sélectionnées de telle manière qu'un écoulement gazeux se produit au moins temporairement du deuxième dispositif d'alimentation en gaz (24) au premier dispositif d'alimentation en gaz (22).

2. Installation (1) selon la revendication 1, **caractérisée en ce que** les conditions de pression du premier dispositif d'alimentation en gaz (22) et du deuxième dispositif d'alimentation en gaz (24) sont sélectionnées de telle manière que les pressions rendues disponibles par lesdits dispositifs d'alimentation en gaz se différencient de moins de 30 %, avantageusement de moins de 20% et préférentiellement de moins de 10 % l'une par rapport à l'autre.

3. Installation (1) selon au moins une des revendications précédentes, **caractérisée en ce que** la deuxième station de transformation (6) est située en aval de la première station de transformation (4) dans la direction de convoyage des récipients en matière plastique (10).

4. Installation (1) selon au moins une des revendications précédentes, **caractérisée en ce que** le premier dispositif d'alimentation en gaz (22) alimente temporairement en fluide gazeux sous pression pour l'expansion et/ou la stabilisation d'un récipient en matière plastique (10) à expanser dans la deuxième station de transformation (6).

5. Installation (1) selon la revendication 4, **caractérisée en ce que** ladite installation (1) comporte un dispositif de commande qui fait que l'intervalle de temps où le premier dispositif d'alimentation en gaz (22) alimente en fluide gazeux la première station de transformation (4) et l'intervalle de temps où le premier dispositif d'alimentation en gaz (22) alimente en fluide gazeux la deuxième station de transformation (6) sont au moins partiellement décalés.

6. Installation (1) selon au moins une des revendications précédentes, **caractérisée en ce que** ladite installation (1) comporte une pluralité de stations de transformation, et toutes les stations de transformation sont au moins temporairement en liaison d'écoulement avec le premier dispositif d'alimentation en gaz (22).

7. Installation (1) selon au moins une des revendications précédentes, **caractérisée en ce qu'**au moins un dispositif d'alimentation en gaz (22, 24) est un canal annulaire.

8. Installation (1) selon au moins une des revendications précédentes, **caractérisée en ce qu'**au moins une barre d'étirage (12) présente une ouverture de sortie de gaz dans une section d'extrémité de la barre d'étirage (12).

9. Procédé d'expansion de récipients en matière plastique, dans lequel les récipients en matière plastique sont gonflés par application d'un fluide gazeux au moyen d'une pluralité de stations de transformation (4, 6) et dans lequel l'alimentation en fluide gazeux est effectuée par un premier dispositif d'alimentation en gaz (22), celui-ci étant conduit vers un récipient en matière plastique se trouvant dans une première station de transformation (4) en traversant au moins temporairement une barre d'étirage (12), **caractérisé en ce**
**qu'**au moins temporairement pendant l'amenée du fluide gazeux vers le récipient en matière plastique se trouvant dans la première station de transformation (4), ladite première station de transformation (4) est en liaison d'écoulement avec un deuxième dispositif d'alimentation en gaz (24), et ledit deuxième dispositif d'alimentation en gaz (24) est au moins temporairement en liaison d'écoulement avec une deuxième station de transformation (6), ladite liaison d'écoulement s'étendant en sections entre la barre d'étirage (12) et l'embouchure du récipient (10).

10. Procédé selon la revendication 9, **caractérisé en ce que** l'amenée du fluide gazeux par la barre d'étirage (12) pour la stabilisation d'une section de récipient est dirigée vers cette section de récipient.

11. Procédé selon la revendication 9, **caractérisé en ce que** le récipient (10) est déjà gonflé par application de fluide gazeux préalablement à l'amenée du fluide gazeux par la barre d'étirage (12).

12. Procédé selon au moins une des revendications précédentes, **caractérisé en ce que** le récipient (10) est soumis à une décharge de pression après son expansion, ladite décharge de pression étant au moins temporairement effectuée par la barre d'étirage (12).

13. Procédé selon au moins une des revendications précédentes, **caractérisé en ce que** l'expansion d'un récipient en matière plastique (10) dans la première station de transformation (4) et l'expansion d'un récipient en matière plastique (10) dans la deuxième station de transformation (6) sont exécutées avec un décalage temporel.

14. Procédé selon au moins une des revendications précédentes, **caractérisé en ce qu'**au moins pendant le soufflage final d'un récipient (10) et/ou pendant la rinçage du récipient (10), le même niveau de pression est sensiblement présenté dans le premier dispositif d'alimentation en gaz (22), dans le récipient (10) et dans le deuxième dispositif d'alimentation en gaz (24).
